# EUROPEAN PATENT SPECIFICATION

(11) **EP 3 845 468 B1**
(45) Date of publication and mention of the grant of the patent: **01.05.2024**
(21) Application number: 20159158.3
(22) Date of filing: 24.02.2020
(51) Int. Cl.: B65D 5/42, B42D 15/02, B42D 15/04

(54) **THREE-DIMENSIONAL GIFT BOX WITH ACOUSTO-OPTIC EFFECT**
DREIDIMENSIONALE GESCHENKSCHACHTEL MIT AKUSTO-OPTISCHEM EFFEKT
BOÎTE CADEAU TRIDIMENSIONNELLE AVEC EFFET ACOUSTO-OPTIQUE

(30) Priority: 31.12.2019 CN 201922472554 U
(43) Date of publication of application: 07.07.2021
(73) Proprietor: Shenzhen Winpsheng Creative Greeting Card Company Limited, Shenzhen, Guangdong (CN)
(72) Inventor: SUN, Jingyun, Shenzhen, Guangdong (CN)
(74) Representative: Ipey

(56) References cited:
- EP-A1- 3 453 538
- CN-U- 202 284 024
- CN-U- 209 337 160
- US-A- 5 588 233
- US-A- 6 068 903
- US-A1- 2013 000 166
- US-A1- 2019 039 398

## Description

### Technical Field

The present invention relates to gift boxes, and particularly to a three-dimensional gift box with acousto-optic effect.

### Background

When people present gifts in various social occasions, the additional effect of an exquisite and unique gift box which upgrading the grade of the present in the gift box cannot be ignored. Nowadays, the conventional gift box on the market are basically a container with certain shape and interior which showing slightly monotonous expression and is unable to meet the increasingly demand from the customers.

US 2019/039398 discloses a three-dimensional gift box comprising:
a box body and a box lid;
a first partition board fixed fitted to the inner edge of the box body;
a circuit layer, formed in a space between the first partition board and the bottom plate of the box body;
a storage layer;
a foldable pop-up card having an upper part connected with an inner side of the box lid;
an electronic assembly module for producing an acousto-optic effect, which is arranged in the circuit layer.

CN209337160U discloses a gift paper box device capable of transmitting customised voice messages. The device comprises a box body, wherein a box cover is hinged on the box body, a drawer for placing gifts is arranged on the box body, an exhibition stand is arranged above the box body, a three-dimensional scene card capable of standing upright along with the opening of the box cover is arranged on the exhibition stand, a background lamp capable of illuminating the three-dimensional scene card from the rear part is arranged on the box cover, and a recording switch is arranged on the exhibition stand.

### Summary

In order to overcome the shortcomings of the prior art, the present invention provides a three-dimensional gift box with acousto-optic effect, which has both of the functions of a pop-up card and an acousto-optic effect, and thus solves the problem of monotonous expression of the traditional gift box.

In accordance with the present invention, there is provided a three-dimensional gift box as defined in claim 1.

The electronic assembly module may comprise a PCBA board, on which a horn, a LED light and a trigger switch for detecting the opening and closing status of the box lid are provided.

The trigger switch may comprise at least one of a microphone, a photoelectric sensor, a gravity sensor, a remote sensing sensor, a hall switch and a magnetron tube.

The range of the expansion angle of the pop-up card may be from 90 degrees to 180 degrees.

The shape of the box body may either a regular geometrical shape or an irregular geometrical shape .

An upper part of the pop-up card may be fixed fitted or detachably fitted to the upper supporting board, the lower part of the pop-up card being either fixed fitted or detachably fitted to the lower supporting board.

The pop-up card may be a printed pop-up card, or a laser printed pop-up card.

The base material used for the box body and box lid may any one of wood, cardboard or plastic.

The surface material used for the box body and box lid may be any one of paper, leather, fabric and plastic film.

The present invention provides a three-dimensional gift box with acousto-optic effect, wherein the space in the box body is divided into three regions, in which, the circuit layer between the first partition board and the bottom plate of the box body comprises an electronic assembly module with a sound and light emitting function; the storage layer between the first partition board and the second partition board is used for containing gifts; and the foldable pop-up card is provided in the space between the second partition board and the inner side of the box lid, the upper and lower parts of the pop-up card are connected with the inner side of the box lid and the second partition board respectively. When the box lid is opened, the pop-up card can be shown with the greeting function; When the second partition board is opened, the gift contained in the storage layer can be seen and taken out; When either the box lid or the second partition board is opened, the electronic assembly module can be triggered to work, and produces the corresponding music and/or light effect according to the pre-set program which providing multiple experiences such as visual, acoustic, optical and electric experiences for the user, and the present invention thus solves the problem of single monotonous monotony expression of the traditional gift box.

### Brief Description of the Drawings

Fig.1 is an expansion view of an embodiment when the three-dimensional gift box with acousto-optic effect is opened (180 degrees), according to the present invention;
Fig.2 is a structure section diagram of an embodiment of the three-dimensional gift box with acousto-optic effect, according to the present invention;
Fig.3 is a structure decomposition diagram of an embodiment of the three-dimensional gift box with acousto-optic effect, according to the present invention;
Fig.4 is an expansion view of another embodiment when the three-dimensional gift box with acousto-optic effect is opened (90 degrees), according to the present invention;
Fig.5 is a structure section diagram of another embodiment of the three-dimensional gift box with acousto-optic effect, according to the present invention;
Fig.6 is a structure decomposition diagram of another embodiment of the three-dimensional gift box with acousto-optic effect, according to the present invention.

The reference characters denote corresponding features in the drawings are marked as follows:
1. box body; 2. box lid; 3. pop-up card; 4. first partition board; 5. second partition board; 6. storage layer; 7. circuit layer; 8. PCBA board; 9. upper supporting board; 10. lower supporting board.

### Detailed Description of the Embodiments

The above is only a summary of the technical solutions of the present invention. For a clear understanding of the technical problem to be solved in the present invention and the technical means and effect of the present invention, the present invention is further described in detail below with reference to the accompanying drawings and specific embodiments.

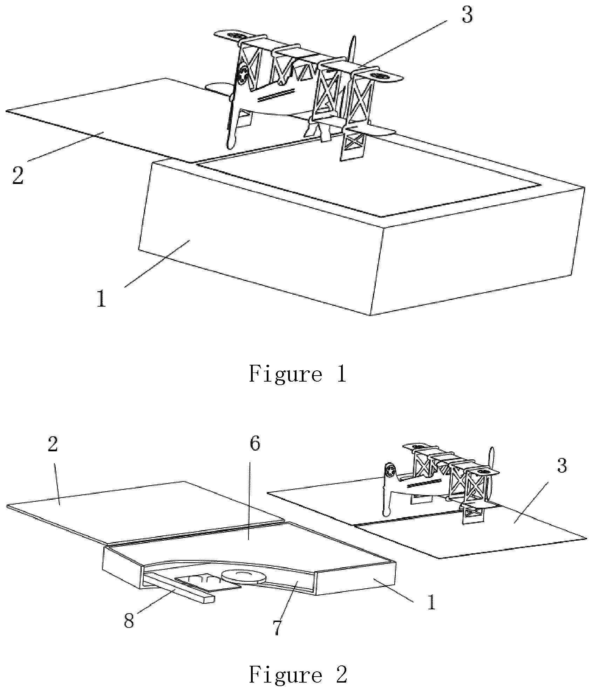

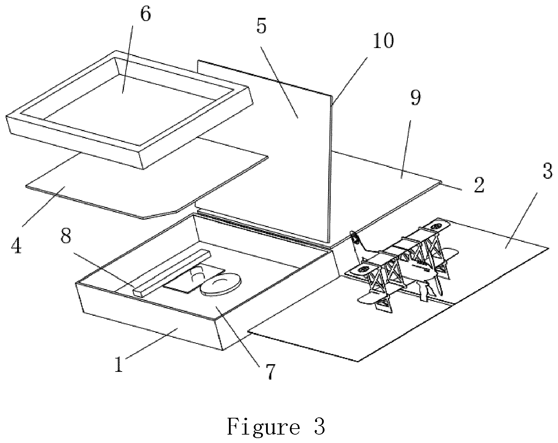

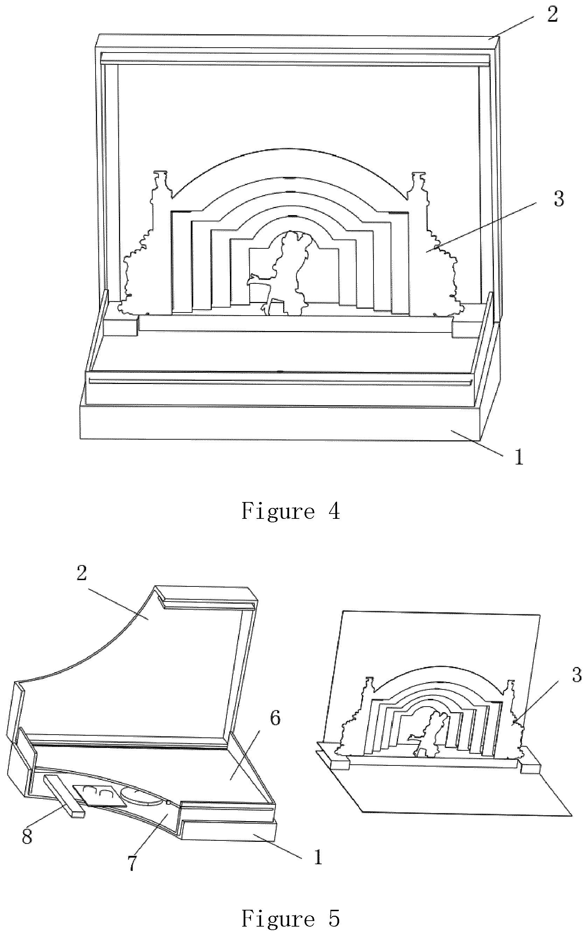

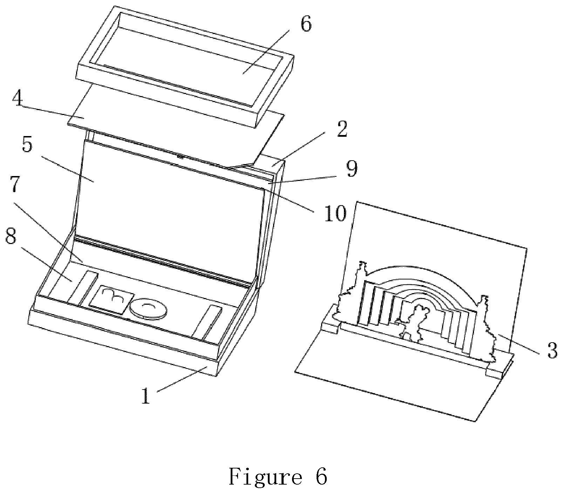

A three-dimensional gift box with acousto-optic effect, as shown in Fig.1 - Fig.6, in which, Fig.1 to Fig.3 show the pop-up card with expansion of 180 degrees; Fig.4 to Fig.6 show the pop-up card with expansion of 90 degrees. Box body (1) is a rectangular shape, but the box body is not limited to this kind of shape, it may also be other regular geometry shapes such as round shaped or star shaped, and or other irregular geometry shapes, which is not restricted here. The box lid (2) is used to cover and close on the box body. The base material used for the box body and box lid can be any of the wood, cardboard and plastic, which is not restricted here. The surface material used for the box body and box lid can be any of the paper, leather, fabric and plastic film, which is not restricted here.

When the box lid (2) is opened, the foldable pop-up card (3) can be displayed in front of the user; The material used for pop-up card can be printed paper or laser marked paper. The topical subject expressed on the pop-up card can be character, architecture, scenery, scene, logo, equipment, container and/or jewellery, etc.; The range of the pop-up card can be expanded changes from 90 to 180 degrees.

The box body is divided into two spatial regions by the first partition board (4) and the second partition board (5), which are the storage layer (6) and the circuit layer (7) respectively, where, the storage layer is used for containing gifts, greeting cards, etc., the second partition board is detachable fitted with box body, which is convenient for the user to open the second partition board and take out the items contained in the storage layer; the circuit layer is provided with a PCBA board (8), on which an electronic assembly module for producing the acousto-optic effect is arranged.

Alternatively, a upper supporting board (9) is arranged between the upper part of the pop-up card and the inner side of the box lid, and a lower supporting board (10) is arranged between the lower part of the pop-up card and the second partition board; The upper supporting board (9) is used for supporting the pop-up card; the upper part of the pop-up card is either fixed fitted or detachable fitted to the upper supporting board, the lower part of the pop-up card is either fixed fitted or detachable fitted to the lower supporting board, which is to say that the pop-up card can be fixed fitted or detachable fitted to the supporting boards according to the requirement of the practical applications.

The electronic assembly module on the PCBA board, in addition to include the necessary processing IC and conventional electronic components, but also includes a horn for providing sound effect; an led light for providing the light display effect, and a trigger switch for detecting the opening and closing status of the box lid. that is, by triggering the switch, different acousto-optic effects can be achieved. For example, if the trigger switch is Hall switch, when the user opens the box lid, the Hall switch can be triggered, and then the processing IC on the PCBA board will drive the horn according to the pre-set program to issue the pre-set or temporary input music ringtone, and the LED light will flash out different optic effects, thus the user can enjoy a full range of visual and acoustical experiences.

it needs to be explained that the specific implementation of the trigger switch is not limited to the hall switch, but also includes but is not limited to the microphone, photoelectric sensor, gravity sensor, remote sensing sensor, magnetron tube, etc. Among them, the microphone can convert a sound signal into an electrical signal, that is, through the sound to achieve the trigger; the photoelectric sensor can convert a light signal into an electrical signal, that is, through the different photosensitization by opening/closing box lid, to achieve the trigger; the gravity sensor can convert the displacement of the box body or the box lid into an electrical signal. Based on different trigger switch realization modes, multi kinds of control modes, such as optical control, magnetic control, sound control, vibration, and conventional button can be achieved for the gift box of the present invention, which can be applied to different application scenarios.

It should be understood that the specific embodiments described above are only used to interpret the invention and are not used to limit the invention. It should be noted that those skilled in the art can make several improvements and modifications without departing from the technical principles of the present disclosure, and these improvements and modifications should also fall within the scope of protection as defined by the appended claims.

## Claims

1. A three-dimensional gift box comprising:
a box body (1) and a box lid (2);
a first partition board (4) fixed fitted to the inner edge of the box body (1);
a circuit layer (7), formed in a space between the first partition board (4) and the bottom plate of the box body (1);
a storage layer (6);
a foldable pop-up card (3) having an upper part connected with an inner side of the box lid (2);
an electronic assembly module (8) for producing an acousto-optic effect, which is arranged in the circuit layer (7), **characterised in that** a second partition board (5) is provided in the box body (1), the second partition board (5) being detachably fitted to the inner edge of the box body (1), the storage layer (6) being is formed in a space between the first partition board (4) and the second partition board (5), the foldable pop-up card (3) being is arranged between the second partition board (5) and the inner side of the box lid (2), the lower part of the pop-up card (3) is connected with the second partition board (5), an upper supporting board (9) arranged between the upper part of the pop-up card (3) and the inner side of the box lid (2), and a lower supporting board (10) is arranged between the lower part of the pop-up card (3) and the second partition board (5).

2. The three-dimensional gift box as claimed in claim 1, wherein, the electronic assembly module (8) comprises a PCBA board, a horn, an led light and a trigger switch are provided on the PCBA board, the trigger switch being used for detecting the opening and closing status of the box lid (2).

3. The three-dimensional gift box as claimed in claim 2, wherein, the trigger switch comprises at least one of the Microphone, photoelectric sensor, gravity sensor, remote sensing sensor, hall switch and magnetron tube.

4. The three-dimensional gift box as claimed in claim 1, wherein, the range of the expansion angle of the pop-up card (3) is from 90 degrees to 180 degrees.

5. The three-dimensional gift box as claimed in claim 1, wherein, the shape of the box body (1) is either a regular geometrical shape or an irregular geometrical shape.

6. The three-dimensional gift box as claimed in claim 5, wherein, the upper part of the pop-up card (3) is either fixed fitted or detachable fitted to the upper supporting board; the lower part of the pop-up card (3) is either fixed fitted or detachable fitted to the lower supporting board.

7. The three-dimensional gift box as claimed in claim 1, wherein, the pop-up card (3) is a printed pop-up card (3), or a laser marked pop-up card (3).

8. The three-dimensional gift box as claimed in claim 1, wherein, the base material used for the box body (1) and box lid (2) is any one of wood, cardboard or plastic.

9. The three-dimensional gift box as claimed in claim 1, wherein, the surface material used for the box body (1) and box lid (2) is any one of paper, leather, fabric or plastic film.

## Patentansprüche

1. Dreidimensionale Geschenkschachtel, umfassend:
einen Schachtelkörper (1) and einen Schachteldeckel (2);
eine erste Trennwand (4), die an der Innenkante des Geschenkkörpers (1) angebracht ist;
eine Schaltungsschicht (7), die in einem Raum zwischen der ersten Trennwand (4) und der Bodenplatte des Schachtelkörpers (1) ausgebildet ist;
eine Aufbewahrungsschicht (6);
eine faltbare Pop-up-Karte (3), die einen oberen Teil aufweist, der mit einer Innenseite des Schachteldeckels (2) verbunden ist;
ein elektronisches Baugruppenmodul (8) zum Erzeugen eines akusto-optischen Effekts, das in der Schaltungsschicht (7) angeordnet ist, **dadurch gekennzeichnet, dass** eine zweite Trennwand (5) in dem Schachtelkörper (1) bereitgestellt ist, wobei die zweite Trennwand (5) lösbar an der Innenkante des Schachtelkörpers (1) angebracht ist, die Aufbewahrungsschicht (6) in einem Raum zwischen der ersten Trennwand (4) und der zweiten Trennwand (5) ausgebildet ist, die faltbare Pop-up-Karte (3) zwischen der zweiten Trennwand (5) und der Innenseite des Schachteldeckels (2) angeordnet ist, der untere Teil der Pop-up-Karte (3) mit der zweiten Trennwand (5) verbunden ist, eine obere Tragwand (9) zwischen dem oberen Teil der Pop-up-Karte (3) und der Innenseite des Schachteldeckels (2) angeordnet ist und eine untere Tragwand (10) zwischen dem unteren Teil der Pop-up-Karte (3) und der zweiten Trennwand (5) angeordnet ist.

2. Dreidimensionale Geschenkschachtel nach Anspruch 1, wobei das elektronische Baugruppenmodul (8) eine PCBA-Platine umfasst, wobei eine Hupe, eine LED-Leuchte und ein Auslöseschalter auf der PCBA-Platine bereitgestellt sind, wobei der Auslöseschalter zum Erfassen des Öffnungs- und Schließzustands des Schachteldeckels (2) verwendet wird.

3. Dreidimensionale Geschenkschachtel nach Anspruch 2, wobei der Auslöseschalter mindestens eines von dem Mikrofon, fotoelektrischen Sensor, Schwerkraftsensor, Fernmesssensor, Hall-Schalter und der Magnetronröhre umfasst.

4. Dreidimensionale Geschenkschachtel nach Anspruch 1, wobei der Bereich des Ausklappwinkels der Pop-up-Karte (3) 90 Grad bis 180 Grad beträgt.

5. Dreidimensionale Geschenkschachtel nach Anspruch 1, wobei die Form des Schachtelkörpers (1) entweder eine regelmäßige geometrische Form oder eine unregelmäßige geometrische Form ist.

6. Dreidimensionale Geschenkschachtel nach Anspruch 5, wobei der obere Teil der Pop-up-Karte (3) an der oberen Tragwand entweder fest angebracht ist oder lösbar angebracht ist; wobei der untere Teil der Pop-up-Karte (3) an der unteren Tragwand entweder fest angebracht ist oder lösbar angebracht ist.

7. Dreidimensionale Geschenkschachtel nach Anspruch 1, wobei die Pop-up-Karte (3) eine bedruckte Pop-up-Karte (3) oder eine lasermarkierte Pop-up-Karte (3) ist.

8. Dreidimensionale Geschenkschachtel nach Anspruch 1, wobei das Grundmaterial, das für den Schachtelkörper (1) und den Schachteldeckel (2) verwendet wird, ein beliebiges von Holz, Pappe oder Kunststoff ist.

9. Dreidimensionale Geschenkschachtel nach Anspruch 1, wobei das Oberflächenmaterial, das für den Schachtelkörper (1) und den Schachteldeckel (2) verwendet wird, ein beliebiges von Papier, Leder, Stoff oder Kunststofffolie ist.

## Revendications

1. Boîte-cadeau tridimensionnelle comprenant :
un corps de boîte (1) et un couvercle de boîte (2) ;
un premier panneau de séparation (4) monté fixe sur le bord interne du corps de boîte (1) ;
une couche de circuit (7), formée dans un espace entre le premier panneau de séparation (4) et la plaque de fond du corps de boîte (1) ;
une couche de stockage (6) ;
une carte surprise (3) pliable ayant une partie supérieure reliée à un côté interne du couvercle de boîte (2) ;
un module d'ensemble électronique (8) destiné à produire un effet acousto-optique, qui est agencé dans la couche de circuit (7), **caractérisée en ce qu'**un second panneau de séparation (5) est prévu dans le corps de boîte (1), le second panneau de séparation (5) étant monté de manière amovible sur le bord interne du corps de boîte (1), la couche de stockage (6) étant formée dans un espace entre le premier panneau de séparation (4) et le second panneau de séparation (5), la carte surprise (3) pliable étant/est agencée entre le second panneau de séparation (5) et le côté interne du couvercle de boîte (2), la partie inférieure de la carte surprise (3) est reliée au second panneau de séparation (5), un panneau de support supérieur (9) étant agencé entre la partie supérieure de la carte surprise (3) et le côté interne du couvercle de boîte (2), et un panneau de support inférieur (10) est agencé entre la partie inférieure de la carte surprise (3) et le second panneau de séparation (5).

2. Boîte-cadeau tridimensionnelle selon la revendication 1, dans laquelle, le module d'ensemble électronique (8) comprend une carte PCBA, un avertisseur sonore, un éclairage DEL et un interrupteur de déclenchement sont prévus sur la carte PCBA, l'interrupteur de déclenchement étant utilisé pour détecter l'état d'ouverture et de fermeture du couvercle de boîte (2).

3. Boîte-cadeau tridimensionnelle selon la revendication 2, dans laquelle l'interrupteur de déclenchement comprend au moins l'un des éléments suivants : un microphone, un capteur photoélectrique, un capteur de gravité, un capteur de télédétection, un interrupteur à effet Hall et un tube magnétron.

4. Boîte cadeau tridimensionnelle selon la revendication 1, dans laquelle, la plage de l'angle d'expansion de la carte surprise (3) est de 90 degrés à 180 degrés.

5. Boîte cadeau tridimensionnelle selon la revendication 1, dans laquelle la forme du corps de boîte (1) est soit une forme géométrique régulière, soit une forme géométrique irrégulière.

6. Boîte cadeau tridimensionnelle selon la revendication 5, dans laquelle la partie supérieure de la carte surprise (3) est soit montée fixe, soit montée de manière amovible sur le panneau de support supérieur ; la partie inférieure de la carte surprise (3) est soit montée fixe, soit montée de manière amovible sur le panneau de support inférieur.

7. Boîte cadeau tridimensionnelle selon la revendication 1, dans laquelle la carte surprise (3) est une carte surprise (3) imprimée, ou une carte surprise (3) marquée au laser.

8. Boîte cadeau tridimensionnelle selon la revendication 1, dans laquelle le matériau de base utilisé pour le corps de boîte (1) et le couvercle de boîte (2) est l'un quelconque parmi le bois, le carton ou le plastique.

9. Boîte cadeau tridimensionnelle selon la revendication 1, dans laquelle le matériau de surface utilisé pour le corps de boîte (1) et le couvercle de boîte (2) est l'un quelconque parmi le papier, le cuir, le tissu ou un film plastique.
